# EUROPEAN PATENT APPLICATION

(11) **EP 3 270 342 A1**
(43) Date of publication of application: **17.01.2018**
(21) Application number: 17181742.2
(22) Date of filing: 17.07.2017
(51) Int. Cl.: G06Q 10/08, G06Q 50/28, B64F 1/36, G06F 17/30

(54) **DATABASE RECORDS AND PROCESSES TO IDENTIFY AND TRACK PHYSICAL OBJECTS DURING TRANSPORTATION**

(30) Priority: 15.07.2016 US 201662363031 P; 13.07.2017 US 201715649567
(71) Applicant: Alitheon, Inc., Redmond WA 98052 (US)
(72) Inventor: Ross, David Justin, Redmond, WA Washington 98052 (US); Kim, David Keesu, Redmond, WA Washington 98052 (US); Land, Scot E., Redmond, WA Washington 98052 (US); Withrow, Justin Lynn, Redmond, WA Washington 98052 (US)
(74) Representative: Herre, Peter

(57) **Abstract**

A computer-implemented method in one example calls for receiving a physical object at a controlled-access facility such as an airport; scanning the object to capture identifying information of the object based on intrinsic properties of the object, without specific need of any label, tag, or other extrinsic proxy that may be attached to the item; and inducting the object into a reference database system by storing a record in the reference database system that includes the feature vector. A tracking system provides substantially continuous position and identity information of the object, and detects the introduction of any foreign object into the system, to improve security, and avoid lost and delayed items such as airline passenger bags. The tracking system may utilize networked tracking units, each unit comprising scanners and a local processor to realize various object tracking and related functions.

## Description

### PRIORITY CLAIM

This application claims priority to U.S. provisional application no. 62/363,031 filed July 15,2016.

### TECHNICAL FIELD

Database records, processes and equipment for integrated authentication and tracking of physical objects during transportation of the objects.

### BACKGROUND

Many different approaches are known to uniquely identify and track physical objects during transportation, including labeling and tagging strategies using serial numbers, barcodes, holographic labels, RFID tags, and hidden patterns using security inks or special fibers. All currently known approaches rely on applied identifiers that are extrinsic to the transported objects and as such fail to fully prevent introduction of counterfeit or otherwise unknown objects in a transportation chain. In addition, many applied identifiers add substantial costs to the production and/or transportation of the objects sought to be identified and tracked. Applied identifiers such as labels and tags are also themselves at risk of being damaged, lost, stolen, or counterfeited.

### SUMMARY OF THE PRESENT DISCLOSURE

The invention is defined by the independent claims, taking due account of any element which is equivalent to an element specified in the claims. The dependent claims concern optional features of some embodiments of the invention. The following is a summary of the present disclosure in order to provide a basic understanding of some features and context. This summary is not intended to identify key/critical elements of the disclosure or to delineate the scope of the disclosure. Its sole purpose is to present some concepts of the present disclosure in a simplified form as a prelude to a more detailed description that is presented later.

The currently known approaches to identifying, authenticating, and tracking physical objects during transportation, include-commonly-the use of extrinsic identifiers such as barcodes and RFID tags that are sporadically read or recognized by a tracking system during transportation. What is lacking in current methods, and is provided by the current disclosure, is the integration of the authentication and tracking process into a single continuous secure process that avoids common vulnerabilities of current approaches by a) using an intrinsic identifier (a digital fingerprint) to authenticate transported objects, and, b) allowing for both sporadic and continuous tracking and identification of transported objects without compromising the integrity of the authentication. The use of digital fingerprints to authenticate objects obviates the need to use fallible applied (or otherwise extrinsic) identifiers as a digital fingerprint reference the physical substance of the object itself rather than relying on applied or extrinsic identifiers, which may be damaged, lost, stolen, or counterfeited.

Additional aspects and advantages of this disclosure will be apparent from the following detailed description of preferred embodiments, which proceeds with reference to the accompanying drawings.

### BRIEF DESCRIPTION OF THE DRAWINGS

In order to describe the manner in which the above-recited and other advantages and features of the present disclosure can be obtained, a more particular description follows by reference to the specific embodiments thereof which are illustrated in the appended drawings. Understanding that these drawings depict only typical embodiments of the disclosure and are not therefore to be considered to be limiting of its scope, the disclosure will be described and explained with additional specificity and detail through the use of the accompanying drawings in which:
FIG. 1A is a simplified flow diagram illustrating a method for creating and recording a digital fingerprint of an object in a database.
FIG. 1B illustrates an example of an alternative process for feature extraction.
FIG. 2 is a simplified flow diagram illustrating a method for matching a digital fingerprint of a target object to a database of existing digital fingerprints.
FIG. 3 is a simplified conceptual diagram showing a method for scanning of an object at various times and places along a manufacture and distribution chain.
FIG. 4 is a simplified conceptual diagram illustrating an example of the use of a mobile device application to query authentication information related to an object.
FIG. 5 is a simplified flow diagram illustrating a method for tracking an object to verify its provenance.
FIG. 6 illustrates an example of authentication region and object feature definition for a U.S. passport.
FIG. 7 is a simplified functional block diagram of selected systems and data communication links associated with an example of an air travel luggage tracking system.
FIG. 8 is a simplified flow diagram of an example of a check-in process consistent with the present disclosure.
FIGS. 9A, 9B and 9C illustrate examples of scanner or camera arrangements for acquiring image data from luggage or parcel pieces consistent with the present disclosure.
FIG. 10 is a simplified diagram illustrating one example of a common secure database server accessible to multiple remote locations for identifying and tracking luggage or parcel pieces consistent with the present disclosure.
FIG. 11 is a simplified diagram illustrating one example of a system for identifying and tracking luggage or parcel pieces in an airport consistent with the present disclosure.
FIG. 12 is a simplified block diagram of an example of a tracking unit consistent with the present disclosure.
FIG. 13 is a simplified diagram to illustrate an example of continuing object (bag) identification and tracking from a bag room to loading an originating aircraft.

### DETAILED DESCRIPTION OF PREFERRED EMBODIMENTS

Reference will now be made in detail to embodiments of the inventive concept, examples of which are illustrated in the accompanying drawings. The accompanying drawings are not necessarily drawn to scale. In the following detailed description, numerous specific details are set forth to enable a thorough understanding of the inventive concept. It should be understood, however, that persons having ordinary skill in the art may practice the inventive concept without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first machine could be termed a second machine, and, similarly, a second machine could be termed a first machine, without departing from the scope of the inventive concept.

It will be understood that when an element or layer is referred to as being "on," "coupled to," or "connected to" another element or layer, it can be directly on, directly coupled to or directly connected to the other element or layer, or intervening elements or layers may be present. In contrast, when an element is referred to as being "directly on," "directly coupled to," or "directly connected to" another element or layer, there are no intervening elements or layers present. Like numbers refer to like elements throughout. As used herein, the term "and/or" includes any and all combinations of one or more of the associated listed items.

The terminology used in the description of the inventive concept herein is for the purposes of describing particular embodiments only and is not intended to be limiting of the inventive concept. As used in the description of the inventive concept and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed objects. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The methods described in the present disclosure enable the identification of an object without the need for attaching, applying, or associating physical tags or other extrinsic identifying materials with the object. A system does this by creating a unique digital signature for the object, which is referred to as a digital fingerprint. Digital fingerprinting utilizes the structure of the object, including random and/or deliberate features created, for example, during manufacturing or use of the object, to generate a unique digital signature for that object-similar to the way in which a human fingerprint references the friction ridges on a finger. Also, like a human fingerprint, the digital fingerprint can be stored and retrieved to identify objects at a later time.

Eliminating the need to add extrinsic identifiers or any physical modifications to an object offers a number of advantages to manufacturers, distributors, buyers, sellers, users, and owners of goods. Forgoing the addition of extrinsic identifiers reduces the cost of manufacturing and offers greater security than physical tagging. Moreover, physical identifiers can be damaged, lost, modified, stolen, duplicated, or counterfeited whereas digital fingerprints cannot.

Unlike prior art approaches that simply utilize a comparison of pixels, a system in accordance with the present disclosure utilizes the extraction of features to identify and authenticate objects. Feature extraction enables users to take a large amount of information and reduce it to a smaller set of data points that can be processed more efficiently. For example, a large digital image that contains tens of thousands of pixels may be reduced to a few locations of interest that can be used to identify an object. This reduced set of data is called a digital fingerprint. The digital fingerprint contains a set of fingerprint features or locations of interest which are typically stored as feature vectors. Feature vectors make image processing more efficient and reduce storage requirements as the entire image need not be stored in the database, only the feature vectors need to be stored. Examples of feature extraction algorithms include-but are not limited to-edge detection, corner detection, blob detection, wavelet features, Gabor, gradient and steerable output filter histograms, scale-invariant feature transformation, active contours, shape contexts, and parameterized shapes.

While the most common applications of the system may be in the authentication of physical objects such as manufactured goods and documents, the system is designed to be applicable to any object that can be identified, characterized, quality tested, or authenticated with a digital fingerprint. These include but are not limited to mail pieces, parcels, art, coins, currency, precious metals, gems, jewelry, apparel, mechanical parts, consumer goods, integrated circuits, firearms, pharmaceuticals, and food and beverages. Here the term "system" is used in a broad sense, including the methods of the present disclosure as well as apparatus arranged to implement such methods.

### Scanning

In this application, the term "scan" is used in the broadest sense, referring to any and all means for capturing an image or set of images, which may be in digital form or transformed into digital form. Images may, for example, be two dimensional, three dimensional, or in the form of a video. Thus a "scan" may refer to an image (or digital data that defines an image) captured by a scanner, a camera, a specially adapted sensor or sensor array (such as a CCD array), a microscope, a smartphone camera, a video camera, an x-ray machine, a sonar, an ultrasound machine, a microphone (or other instruments for converting sound waves into electrical energy variations), etc. Broadly, any device that can sense and capture either electromagnetic radiation or mechanical wave that has traveled through an object or reflected off an object or any other means to capture surface or internal structure of an object is a candidate to create a "scan" of an object. Various means to extract "fingerprints" or features from an object may be used; for example, through sound, physical structure, chemical composition, or many others. The remainder of this application will use terms like "image" but when doing so, the broader uses of this technology should be implied. In other words, alternative means to extract "fingerprints" or features from an object should be considered equivalents within the scope of this disclosure. Similarly, terms such as "scanner" and "scanning equipment" herein may be used in a broad sense to refer to any equipment capable of carrying out "scans" as defined above, or to equipment that carries out "scans" as defined above as part of their function, such as the "tracking units" described later in this disclosure.

### Authenticating

In this application, different forms of the words "authenticate" and "authentication" will be used broadly to describe both authentication and attempts to authenticate which comprise creating a digital fingerprint of the object. Therefore, "authentication" is not limited to specifically describing successful matching of inducted objects or generally describing the outcome of attempted authentications. As one example, a counterfeit object may be described as "authenticated" even if the "authentication" fails to return a matching result. In another example, in cases where unknown objects are "authenticated" without resulting in a match and the authentication attempt is entered into a database for subsequent reference the action described as "authentication" or "attempted authentication" may also, *post facto*, also be properly described as an "induction". An authentication of an object may refer to the induction or authentication of an entire object or of a portion of an object.

### Authentication Regions

Because digital fingerprinting works with many different types of objects, it may be useful to define what regions of digital images of objects are to be used for the extraction of features for authentication purposes. The chosen regions may vary for different classes of objects. In some embodiments, a chosen region may be the image of the entire object; in other embodiments chosen regions may be one or more sub-regions of the image of the object.

For instance, in the case of a photograph, a digital image of the entire photograph may be chosen for feature extraction. Each photograph is different and there may be unique feature information anywhere in a photograph. In such a case, the authentication region may be the entire photograph.

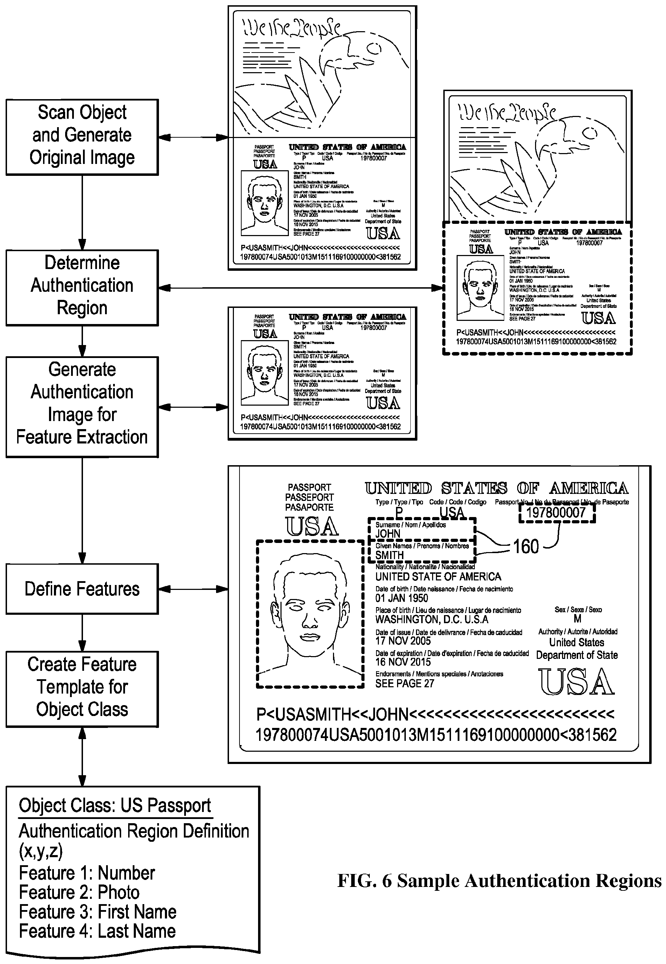

In some embodiments, multiple regions may be used for fingerprinting. In some examples, there may be several regions where significant variations take place among different similar objects that need to be distinguished while, in the same objects, there may be regions of little significance. In other examples, a template may be used (see FIG. 6) to define regions of interest, including elimination of regions of little interest.

In one embodiment, an object, such as a bank note, may be deemed authenticated if a few small arbitrary regions scattered across the surface are fingerprinted, possibly combined with one or more recognitions of, for example, the contents of a region signifying the value of the bank note or one containing the bank note serial number. In such examples, the fingerprints of any region (along with sufficient additional information to determine the bank note value and its purported identity) may be considered sufficient to establish the authenticity of the bill. In some embodiments, multiple fingerprinted regions may be referenced in cases where one or more region may be absent from an object (through, for example, tearing) when, for example, a bank note is presented for authentication. In other embodiments, however, all regions of an object may need to be authenticated to ensure an object is both authentic and has not been altered.

In one embodiment, a passport may provide an example of feature extractions from multiple authentication regions; see FIG. 6. In the case of a passport, features chosen for authentication may be extracted from regions containing specific identification information such as the passport number, the recipient name, the recipient photo, etc., as illustrated in FIG. 6. In some examples, a user may define a feature template specifying the regions whose alteration from the original would invalidate the passport, such as the photo, identifying personal data, or other regions considered important by the user. More details of feature templates are given in Ross, et at. U.S. Pat. No. 9,443,298.

In some embodiments, an ability to define and store optimal authentication regions for classes of objects may offer benefits to a user. In some embodiments, it may be preferable to scan limited regions of objects rather than to scan entire objects. For instance, in the case of an article of designer clothing, scanning a clothing label may be preferable to scanning an entire garment. (To be clear, the label or a portion of it is scanned for fingerprinting, not to recognize text on the label.) Further, defining such regions may enable detection of partial alteration of an object.

Once an authentication region is defined, specific applications may be created for different markets or classes of objects that may assist users in locating and scanning an optimal authentication region. In some embodiments, for example when utilizing a mobile device, a location box and crosshairs may automatically appear in the viewfinder of a smartphone camera application, to help the user center the camera on an authentication region, and automatically lock onto a region and complete a scan when the device is focused on an appropriate area. It should be noted that, although some examples suggested above are two-dimensional objects (passport, bank note), the present disclosure is fully applicable to three-dimensional objects as well. As previously noted, scanning may be of any kind, including 2-D, 3-D, stereoscopic, HD, etc. and is not limited to the use of visible light or to the use of light at all (as previously noted, sonar and ultrasound are, for example, appropriate scanning technologies).

In some embodiments, objects may have permanent labels or other identifying information attached to them. In addition to the objects themselves, these attachments may also be referenced as features for digital fingerprinting, particularly where the label or other identifying information becomes a permanent part of the object. In one example, a permanent label may be used as an authentication region for the object to which it is affixed. In another example, a label may be used in conjunction with the object itself to create a fingerprint of multiple authentication regions referencing both a label and an object to which the label is affixed.

In one example, wine may be put into a glass bottle and a label affixed to the bottle. Since it is possible that a label may be removed and re-applied elsewhere merely using the label itself as an authentication region may not be sufficient. In this case the authentication region may be defined so as to include both a label and a substrate it is attached to-in this example some portion of a label and some portion of a glass bottle. This "label and substrate" approach may be useful in defining authentication regions for many types of objects, such as various types of goods and associated packaging. In other instances, authentication may reveal changes in the relative positions of some authentication regions such as in cases where a label has been moved from its original position, which may be an indication of tampering or counterfeiting. If an object has "tamper-proof" packaging, this may also be included in the authentication region.

In some embodiments, multiple authentication regions may be chosen from which to extract unique features. In a preferred embodiment, multiple authentication regions may be selected to enable the separate authentication of one or more components or portions of an object. For example, in one embodiment, features may be extracted from two different parts of a firearm. Both features may match the original firearm but since it is possible that both parts may have been removed from the original firearm and affixed to a weapon of different quality, it may also be useful to determine whether the relative positions of the parts have changed. In other words, it may be helpful to determine that the distance (or other characteristics) between Part A's authentication region and Part B's authentication region remains consistent with the original feature extraction. If the positions of Parts A and B are found to be consistent to the relative locations of the original authentication regions, the firearm may be authenticated. Specifications of this type may be stored with or as part of a digital fingerprint of an object.

Once a digital fingerprint of an object is acquired, a characterization of the object and corresponding fingerprint may be recorded in a database. For example, in some embodiments, a fingerprint may comprise one or more feature vectors. In some applications, the database may be secure. In some embodiments, a unique identifier or ID may be assigned to an object, for example in cases where an ID may be a convenient index in an application. However, an ID is not required since a digital fingerprint itself may serve as a key for searching a database. In other words, by identifying an object by the unique features and characteristics of the object itself, arbitrary identifiers, labels, tags, etc. are rendered unnecessary.

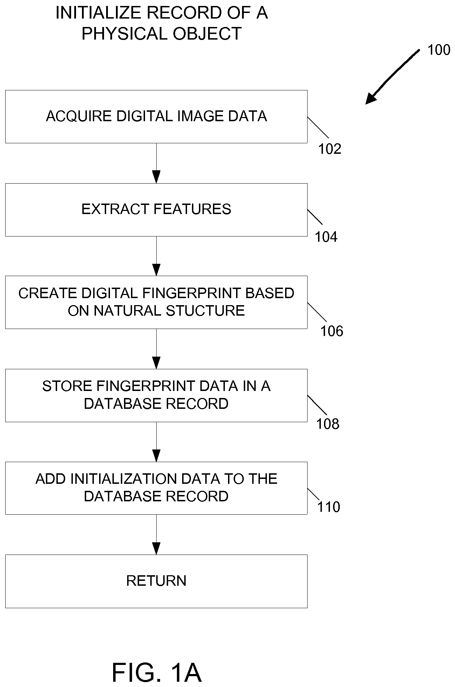

FIG. 1A is a simplified flow diagram illustrating a method 100 for creating and registering a digital fingerprint of an object in a database. The process, in one embodiment, includes acquiring a digital image data of the object, at block 102, as described above. A variety of scanning technologies and devices may be used as previously noted. Next, features are extracted, at block 104, from the digital image data. As above, specific features or regions of interest (authentication regions) may be selected in anticipation of subsequent identification or authentication attempts of an object. The extracted features are analyzed and feature vectors are extracted to form a digital fingerprint, indicated at block 106. The digital fingerprint may be stored in a database record at block 108. Other forms of searchable digital data storage should be deemed equivalents. Further, at block 110, initialization data may be added to the database record or associated with it in a related table. This data may be associated with the physical object that was scanned. This data may be, for example, a description, manufacturer, model number, serial number, contents, or any other data deemed appropriate or useful for the object or a class of objects.

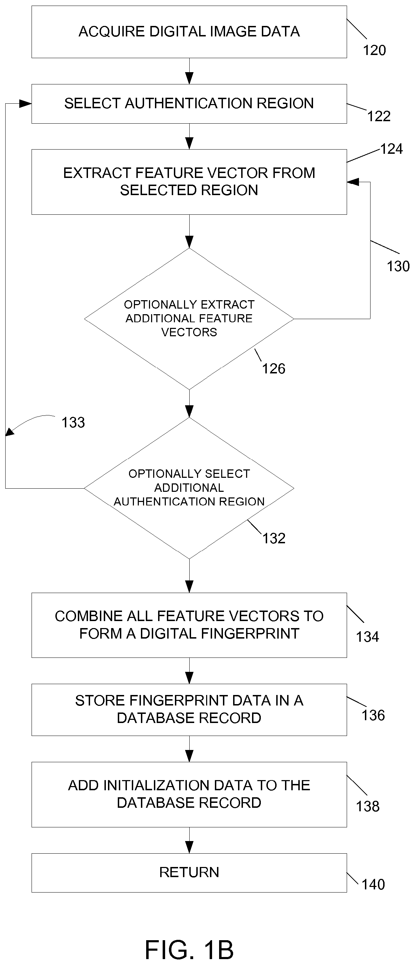

FIG. 1B illustrates an example of a process that includes more robust feature extraction. In one embodiment, the process similarly begins with acquiring digital image data, at block 120. At least one authentication region is selected, at block 122. This may be done by analysis of the image data, analysis of related image data, by reference to a predetermined template that defines at least one authentication region, or other means. The next block 124 calls for extracting a feature vector from a selected authentication region. A feature vector may be used to represent features of a region in a more compact form. In some examples, a feature vector may comprise an array of color or gray scale numeric values corresponding to areas within the selected authentication region. The values may each comprise a sum, average, maximum, or other function of the individual values of a corresponding group of pixels forming a sub-part of the region. In some embodiments, a feature vector may identify a location and shape of a distinctive aspect within a selected region. In decision 126, there may be additional feature vectors to be extracted from the same image data. In that case, the flow returns, path 130, to repeat the feature extraction block 124. The loop comprising block 124, path 130, and decision 126 may repeat until all desired feature vectors are collected. Optionally, there may be another authentication region to process in the same image data, see decision 132. In that case, path 133 is traversed back to block 122 for further feature extraction with respect to one or more additional authentication region. Then some, or all, of the extracted feature vectors may be combined to form a digital fingerprint, block 134, which is then stored in a database record, block 136, along with related data, block 138, as mentioned above. The process returns or concludes at block 140.

A database of digital fingerprints may form the basis of a system to identify or track an object in a supply chain, distribution network, sales channel, transportation such as by carrier, or any other series of locations, ownerships, or possessions. An identification system based on digital fingerprinting has unique advantages and capabilities that are not available with identification systems based on currently available methods.

Current identifiers such as holograms, barcodes, and serial numbers may all be duplicated (or otherwise counterfeited) with varying degrees of effort. Because such identifiers are vulnerable to diversion and counterfeiting, a counterfeit object with a duplicated identifier-and counterfeit objects with otherwise counterfeited identifiers-may enter a supply chain or distribution network. The counterfeit identifiers may subsequently be registered in a conventional identification or track-and-trace system. All current identification systems rely on determining whether the identifier (label, hologram, RFID tag) is legitimate, not whether the object itself is legitimate.

Due to this weakness, identification and tracking systems based on conventional approaches like barcodes or serial numbers cannot prevent counterfeit objects from entering a supply chain or prevent the resulting corruption of the system database. A counterfeit object may be mistakenly identified as genuine, and generate a false audit trail as it is identified through the supply chain. Two or more objects with the same ID (one genuine, one or more counterfeit) may exist at the same time without detection. Without physically examining the objects it may be impossible to tell which object is genuine and, depending on the quality and origin of the counterfeits, even physical examination of an object may be insufficient to determine its authenticity.

Once a counterfeit object has been detected in a conventional system, false audit trails must be removed from the system database to restore integrity. This may be difficult depending on the structure of the database and the complexity of the identification data. In some cases, the objects may not have any further contact with a system (for instance if they are purchased by a consumer), and the record will never be identified as false, leaving the database permanently corrupted.

In some embodiments of the present disclosure, an object may be scanned and identified at initial manufacture. Alternatively, an object may be scanned and identified at any subsequent time or location for entry into a database. Preferably, the scanning and identification is carried out when an object is either in the possession of its manufacturer or has been transferred by secure means to the point of scanning so that its legitimacy at the point of identification may be adequately established. However, this is not necessary and the adequate legitimacy of an object may be established through various other means both prior to or following induction.

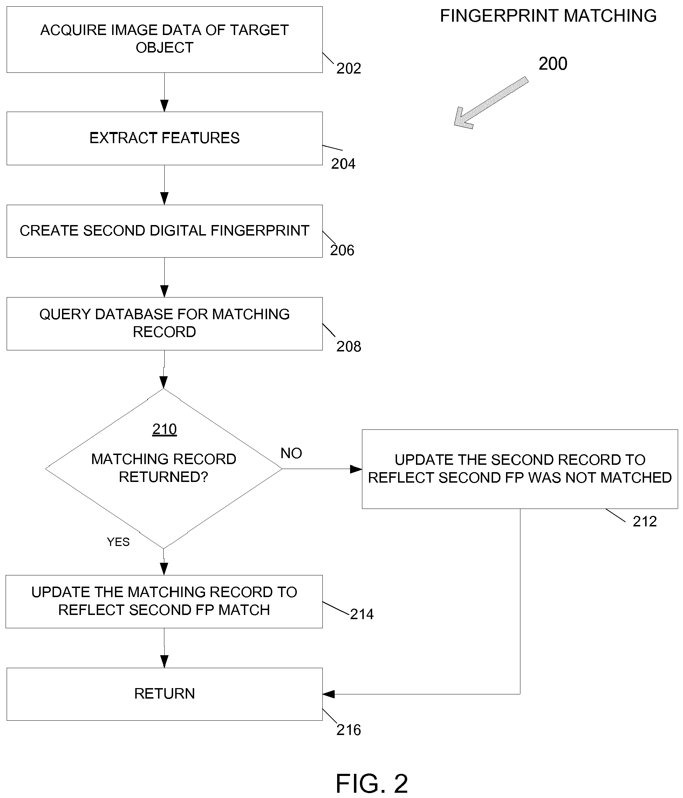

In an embodiment, the system subsequently identifies the scanned and identified object every time the object is scanned again, typically at discrete steps in manufacturing, distribution, and sale, and as part of a data collaboration scheme. FIG. 2 is a simplified flow diagram illustrating a method 200 for matching a digital fingerprint of a target object to a database of existing digital fingerprints. Block 202 shows acquisition of the image data of a "target object" i.e., the object sought to be identified or authenticated by returning a match in the database. Features are extracted the target object image data at block 204, as discussed above. A new (second) digital fingerprint record is created based on the extracted features at block 206. The next step is querying the database, block 208, for a record that matches the second digital fingerprint record. "Matching" in this context may reflect a threshold confidence level rather than a binary decision. The requisite confidence level may vary depending on the specific application. The confidence level required may be varied dynamically responsive to the data and experience with a given system. If no "matching" record is returned, decision 210, the second digital fingerprint record (the digital fingerprint ("FP") of the target object), block 212, is updated to reflect that no match was returned. If a match is returned, the matching record is updated to reflect the match at block 214, for example, it may be linked to the second record. The results may be returned to the user at block 216.

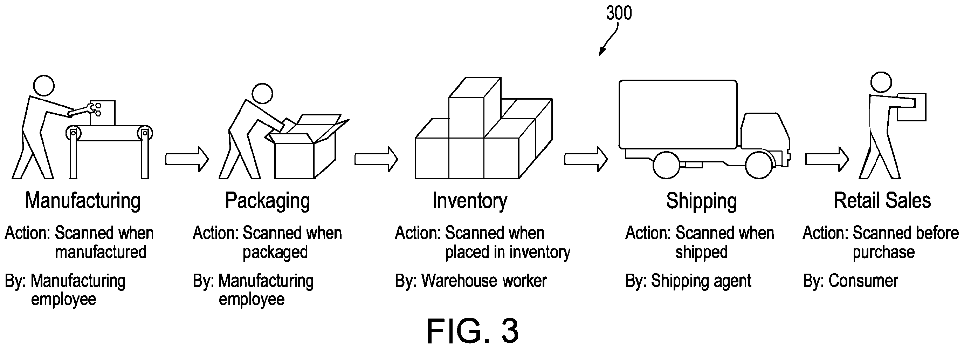

Examples of scanning locations might include scanning at the point of manufacture, when packaged, when placed in inventory, when shipped, and at a retail point of sale (e.g. upon arrival and again when sold), as illustrated in the tracking process of FIG. 3. Scans may take place as a part of a data collaboration scheme. Each scan may be used to update a remote database.

As previously described, a "scan" may refer to an image (or to digital data that defines an image) captured by a broad range of capturing devices. In an embodiment, a scan of an object may capture both features of the object and features of an identifier that has been attached to the object. Feature vectors extracted from authentication regions located on an attached identifier are based on the substances of which the identifier is physically comprised rather than the information (typically alphanumeric) that is intended to be communicated by the identifier. For instance, in the case of a wine bottle, features may be captured from the bottle and from a label affixed to the bottle. If the label includes a standard UPC barcode, the paper of the label and the ink pattern of the barcode may be used to extract a feature vector without reading the alphanumeric information reflected by the barcode. An identifier, such as a UPC barcode print consisting of lines and numbers, has no greater significance in the creation and use of a feature vector than a set of randomly printed lines and numbers.

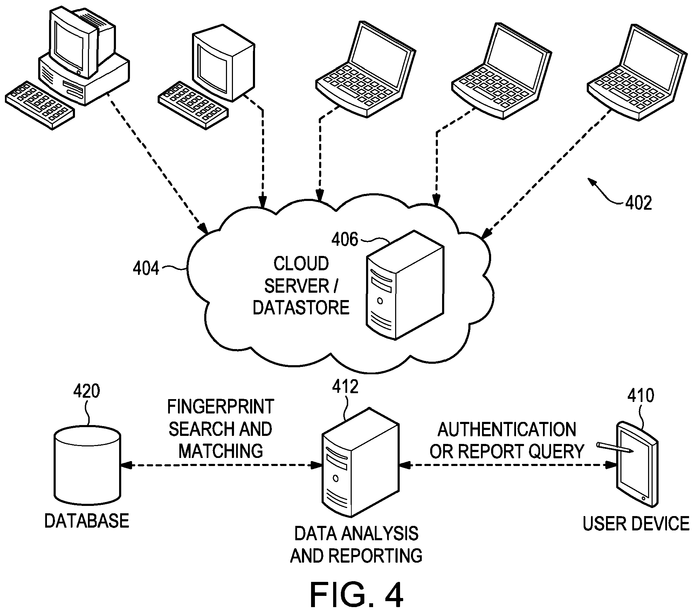

FIG. 4 is a simplified conceptual diagram illustrating an example of the use of a mobile device application to query authentication information related to an object. Here, various computing devices or terminals 402 may have access over a network, for example, the internet 404, to cloud computing facilities or services such as a cloud server or other datastore 406. For example, devices 402 may be located at various points along a distribution chain as illustrated in FIG 3, each location scanning an object and updating a cloud server or other datastore 406.

A server 412 may be provisioned to provide identification and/or tracking data analysis and reporting. The server 412 has access to a database 420 which may be used to store digital fingerprints and related data. The server can query or search the database 420 for digital fingerprint search and matching. The database 420 is preferably coupled to the cloud server 406 in some embodiments. A mobile user device 410 such as a smartphone, tablet, laptop computer, or dedicated device may be configured for communications with the server 412 to request and receive a reply or authentication report for an object of interest. This architecture is simplified, and in any event, is merely illustrative and not intended to be limiting.

In some embodiments, sensors may be attached to the object, and sensor data can flow back to the database in either a continuous fashion (near real time), or in discrete data transfer events. For example, data transfer may occur when an authentication event occurs. For instance, if there is a GPS chip attached to the object, data flow can start when the object is first registered in the system, and continue to flow as the object changes location. Continuous or intermittent data updates may also be buffered in local memory in a sensor attached to an object, and then downloaded the next time the object is scanned and authenticated. This example provides an itinerary record of where the object has traveled. Alarm messages or other actions may be triggered by the sensor data, for example, when a specific metric crosses a threshold alarm value, or when expected sensor data is not timely received.

As an example of the potential uses of sensor data, many products like food and beverages can degrade with exposure to certain environmental factors during storage and shipment. Examples of sensor data could include temperature, humidity, light exposure, altitude, oxygen level, or other factors, as well as location such as GPS data.

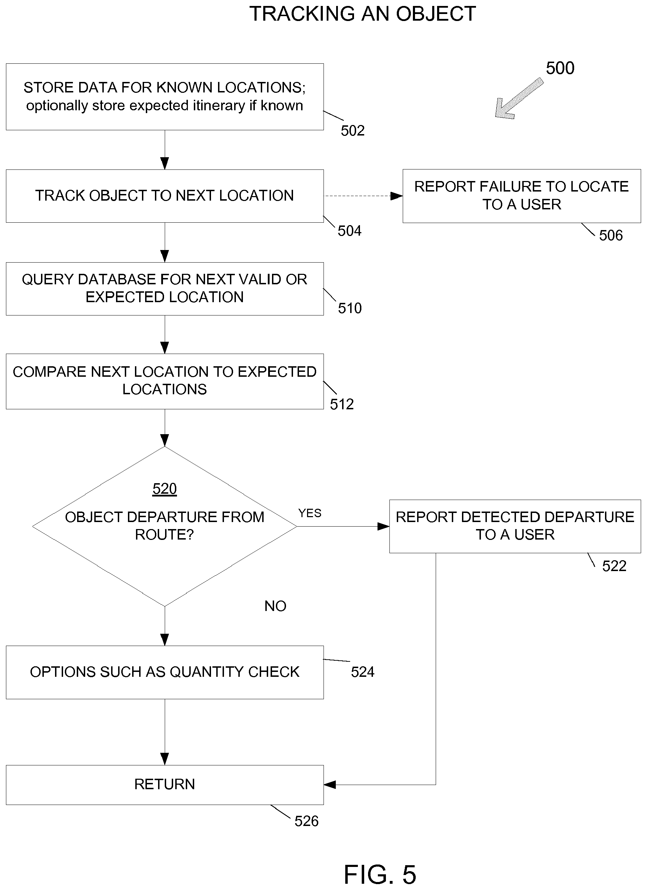

FIG. 5 is a simplified flow diagram illustrating one embodiment of a process 500 for identifying an object to verify its provenance. Here, an expected itinerary of an object (a series of locations) may be stored in a datastore if known, block 502. The methods and systems described above may be used to track the object to the next location, block 504. If the object does not arrive as expected (where and when expected according to the itinerary), the failure may be reported to a user, block 506. In an embodiment, an object that arrives later than expected may be subjected to closer matching scrutiny to ensure its identity.

The next step, block 510, is to query the database for the next valid or expected location. A unique itinerary may not be known, but a set of valid or expected locations may be known. The next actual location of the object (as determined by imaging and matching digital fingerprints) may be compared to the expected location(s) returned by the database, block 512. If that comparison indicates a departure from the expected or authorized route, decision 520, the result may be reported to a user, block 522. (A report that the object is on track may be reported as well.) Other options may be implemented such as a quantity check, block 524. The process returns or terminates at block 526.

Most existing identification systems are designed to be accessed only by manufacturers or their authorized distributors, and some require specialized scanners or equipment. However, consumers also have a vested interest in determining whether the objects they are buying are authentic. A purchaser's interest may go beyond monetary value. Counterfeit pharmaceuticals, for example, may present a serious health hazard. Other parties may also have an interest in determining the authenticity of an object, for example in response to offered or future incentives for object data collection. In some embodiments, the present system is designed to enable anyone along the supply, distribution, or sales chain, from manufacturer to the retail consumer or other members of the public, to access the system and determine whether the object is authentic. A specialized scanner is not required in all cases. For example, in one embodiment a mobile phone application designed for public use can be employed to scan an object, query the database, and determine if the object is authentic.

Finally, data collected by a digital fingerprinting system offers a variety of useful information to stakeholders along the supply, distribution, and sales chain. Reports can be generated on individual objects, or on sets of objects. These reports can include, but are not limited to, the locations of objects over time, audit trails, points of entry of counterfeit goods, and exposure to environmental variables over the course of an object's lifetime.

### Tags and Barcodes

In some instances, an identifier such as a tag or a label may be considered a useful addition to an object, mainly for two reasons. The first main reason is that a human may need to reference it for information. For example, a tag or a label may inform a store clerk as to the particular style and size of a piece of clothing by a particular manufacturer, or it may tell a postal carrier the address to which a mail piece should be delivered. The second main reason has to do with the employment of machine-readable tags, for example when an Intelligent Mail Barcode on a mail piece (unreadable by humans) is used to route the mail piece by machine. The entire class of existing machine-readable tags can be replaced by the methods of the present disclosure. In some instances, tags or labels may still be needed for human information but they are unnecessary for the purpose of authentication or any machine-readability functions.

Because digital fingerprinting exploits natural features and often involves scanning an object under variable conditions, it is highly unlikely that two different scans will produce the exact same fingerprint. As a result, an ability to look up objects in the database when there is a near-miss is included. In one example, two feature vectors [0, 1, 5, 5, 6, 8] and [0, 1, 6, 5, 6, 8] are not identical but, given a certain difference metric, they may be close enough to say with a level of certainty that they are from a certain object that has been scanned before. This is particularly true if, otherwise, the nearest feature vector of a different object is, for example, [5, 2, 5, 8, 6, 4]. For example, a distance between vectors of n-dimensions may be calculated and used as one metric of similarity or "closeness of match" between two or more vectors. The distance to the next nearest candidate may also be considered.

### Global versus Regional Feature Matching

In some embodiments, where an original document or other object has been fingerprinted, the digital fingerprinting techniques allow region-by-region matching, making apparent which (if any) regions have changed from the original. Thus, for example, a good *overall match* on a passport may be achieved but if none of the matches happen in the photograph it becomes apparent that the photograph has likely been changed. Further, if some individual or group, say a known criminal organization, has a certain pattern or regularity to altering passports-such as to change the photo, the date of birth, and one digit of the passport number-then this ability to find altered regions may also provide the ability to discern a pattern of changes that may be used to identify a "signature" modus operandi of, for example, a particular counterfeiter. Thus, aspects of digital fingerprinting may be applied not only to detect a forged or altered object, but may also be used to identify a counterfeiter or otherwise discover the source of an altered object.

### Methods for Identifying and Tracking Physical Objects during Transportation

Among benefits of the present disclosure is the concept of identifying and tracking an object by referencing the object itself—i.e. its intrinsic material characteristics-rather than relying on a proxy. By referencing the object itself, the inherent problems presented by the use of an affixed identifier (that may become damaged or separated from the object) are entirely avoided. Moreover, all sides and orientations of the object may be used for acquiring identifying and/or tracking data.

One example of the currently known methods for identifying and tracking physical objects during transportation may be illustrated by reference to the current intra-airport customer baggage management process. In current baggage management systems, tracking is typically performed by combining barcode-readable bag tags with a "virtual bin" tracking system. Virtual bin tracking-frequently employed due to the prohibitive cost of using high-priced airport barcode scanning arrays for continuous conveyor coverage-employs stepper motors and shaft encoders to track the conveyor rather than the piece of luggage.

Main areas in the current luggage tracking/tracing process are summarized below, beginning at Check-in:
- A passenger surrenders a piece of luggage (bag) at check-in
- The bag is weighed to determine if it exceeds a weight limit.
- A bag tag is applied to the bag. Bag tags are generally composed of paper, though there are experimental systems where the tag is either a temporary or permanent RFID tag.
- A copy of part of the tag is given to the passenger for claiming the bag at destination or aid in finding the bag if misrouted or lost.
- Tag data is associated with a passenger record.

After check-in is completed, the bag enters the conveyor system for transport to the airplane. Throughout most of the conveyor course, the bag is routed by a virtual bin system which employs a random but temporarily unique four-digit number that represents a place on the conveyor system. The conveyor belt is tracked by counting the rotations of the conveyor motors rather than by tracking the bag tag due to the high price of barcode scanning arrays. Where barcode scanning arrays are used to identify bags, the successful read-rate per scanning array tends to be low (e.g. 70-85%) largely because only the bag tag can be used to identify the bag, that bag tag is only in one place (generally attached to a handle), and that one place can be anywhere on the bag, including underneath the bag.

Next, the bag is typically routed to a lead-curtained explosives detector that scans the bag for unauthorized materials. The virtual bin information is lost at this point. Moreover, contact with the lead curtains that enclose the explosives detector regularly causes damage to or loss of the bag tag. Virtual bin positions are also lost when bags are manually inspected by TSA so that bags must be recaptured after inspection by tag reading. On occasion, a bag that should be manually inspected is accidentally sent through the system. Because the identity of the bag is not known in the virtual bin system it is difficult to know which virtual bin position the bag occupies so the entire system must typically be stopped and searched to find the bag. Such stoppages cause costly delays of both bags and airplanes. By contrast, preferred embodiments of the system described in the present disclosure allow continuous positive control over a bag whereby the system knows where the bag is at all times-which may vastly expedite and simplify bag retrieval.

While traveling from inspection to an airplane a bag must typically go through several diverter gates. Along the way, tracking is, again, primarily by virtual bin number that is in most cases a different one than the bin number assigned prior to the explosives screening. Typically, there are bag tag barcode readers along the conveyor, but they are generally kept to a minimum due to the expense of such readers. The diverter gates are triggered by electric eyes detecting the presence of a bag (within the allowed spacing for the virtual bin) and switching is determined by reference to the passenger record associated with the bag associated with that virtual bin. At the end of its conveyor run, the bag is either loaded into a container that will, in turn, be loaded on the airplane (often the case with larger planes) or placed on a cart and driven to the plane.

Either the loading container or the airplane hold itself is loaded manually, with each bag tag scanned and the bag subsequently placed within the container or cargo hold. Bags are counted manually as they are loaded. If there is extra room, space on the plane is commonly offered for sale for freight. Bags without bag tags are not loaded on the plane. Bags belonging to passengers whose presence on the plane cannot be ascertained are offloaded or not loaded. Once the airplane makes it to the transfer or destination airport, the plane is unloaded. Unloading bags at a transfer airport frequently causes damage to or loss of bag tags. The loss of a bag tag at a transfer airport may result in significant delays when an unlabeled bag is intermixed with other bags before the absence of a label is discovered.

At a transfer terminal, tracking between airplanes may be essentially the same as from check-in to airplane except for the initial screening process. In some cases, such as international transfers, a bag is routed through security screening before arriving at the aircraft. Bag transport (at the destination terminal) to baggage claim carousel may not require tracking by reading the tag or using virtual bins if there is direct path from the airplane to the carousel (i.e. bags are not intermixed with other bags not destined for that carousel). Bags that are lost or misrouted are subject to management by exception.

Current methods for exceptions management may be generally summarized as follows:
- Bags that lose their tags (or the tags otherwise become unreadable) from check-in to pick-up are routed to a manual station. If the tag can be read by a barcode reader, the bag is scanned, the bag reentered into the system, and issues with the tag are resolved.
- If the tag is missing or unreadable, the bag is routed first to TSA for inspection for safety (but not for identity information). Once the bag passes TSA security screening it goes to the airline for identification and reconciliation. If the loss of tag occurs in an area containing bags from multiple airlines the process of reconciliation may be prolonged. Generally, a tag-less bag will miss its designated flight (or carousel pickup time).
As may be understood from the above example, a common factor in many problems associated with current systems is the use of an external proxy (a tag or label) for identifying and tracking a transported object which results in problems when the identifier and the object become separated or the proxy otherwise fails.

To be useful in tracking, a barcode tag must be visible and readable to one of the scanning components of a barcode reader. A RFID tag must be sufficiently spatially separated from other such tags to allow the tag to be unambiguously associated with the correct bag and it must function in an electrically noisy environment. All known types of labels or tags, both printed and electronic, have similar drawbacks and limitations.

Bag tags offer no contingencies. If a tag becomes lost, damaged, or otherwise obscured, the bag can no longer be routed by reading of the tag. If the tag is missing, the bag must rely on manual identification, which in most cases will cause the bag to miss its scheduled flight. Since both barcodes and RFID tags depend on reading the tag rather than identifying the bag to which they are attached, a lost, damaged, or otherwise obscured tag typically renders the bag unidentifiable until a time-consuming manual investigation is undertaken. A recent suggestion was to employ a smartphone application ("app") to assist luggage check-in by using a smartphone camera to scan a barcode label attached to the luggage. However, this development would do nothing to mitigate the problems elaborated *supra.*

Virtual bin tracking is necessitated by the high cost (and relatively low reliability) of the barcode tracking systems. However, virtual bin tracking presents its own problems:
- The belt is tracked, not the bag or the bag tag. The level of granularity is therefore even less than with bag tag use.
- Tracking the belt instead of the bag increases the vulnerability and fallibility of the system in several ways, among them: The substitution of one bag for another may go undetected. Any bag movement on the conveyor, e.g. tumbling while traversing down a steep slope or from interaction with a diverter gate can cause the belt tracking to fail. Any jam, obstruction, or manual intervention results in loss of the ability to associate data and metadata with the bag until the tag can be read again, which generally requires the bag to be routed in a way that significantly delays both it and many other bags. A jam that requires stopping the belt may result in the loss of the virtual bin-based tracking of all bags on the halted belt or belts.

Virtual bin-based tracking fails when the bag reaches the explosives detector (and a new one must be reestablished on the other side), whenever manual processing is required (the tag can't be read by a barcode station, or when TSA needs to look at a questionable bag), and whenever there is stoppage of the conveyor for any reason.

Both barcode and RFID approaches require an identification proxy be added to the bag which leaves open the possibility for bad actors to remove proxies from their original object to a different object-such as removing a bag tag from an inspected bag and attach it to an uninspected bag, without the system being able to detect such a switch, as the system only recognizes the proxy and not the object itself.

Even if a tag is present, the fact that it is only in one place means that it can be obscured by part of the bag, become crumpled or folded, or otherwise made unreadable. Current systems fail to read a significant number of bags even when a tag is present. When a tag cannot be read the bag is routed to costly and time consuming manual correction station which increases risk by providing additional opportunities for bad actors to have contact with the bag.

Because bag tags are made to be easily removable by the traveler, accidental removal is also easy. Causes of accidental removal include:
- The lead curtains of the explosives detector
- Other bags, especially their wheels and handles
- Diverter gates
- During loading and unloading of airplane or of loading container.

Jams cause loss of virtual binning efficiency on all affected conveyor belts and bags must make another circuit of the conveyor system. The extra time on the conveyor belt can cause the bags to miss their flights. Virtual binning can also be lost if a bag tumbles going down a steep section of a conveyor or while transferring from one belt to another and so loses its position on the belt. Bags are manually scanned on entering the airplane's hold (or the loading container) and manually counted, which is time consuming and vulnerable to human error. At present, current systems provide no detailed indication of where a bag has been placed on the airplane or what it looks like. This means that, potentially, an extensive amount of bag tags in a cargo hold must be checked in order to retrieve a bag that is to be offloaded.

Additional problems and limitations of current systems may include the following: Generally, the airline does not know if or how much excess cargo space will be available on an airplane until most or all checked luggage is onboard and, therefore, cannot make that unoccupied space available to buyers of air freight. As a result, the airline may be relegated to accepting ground freight prices for the space or forgo the monetizing of it altogether.

Further, when a tag is missing or completely unreadable the bag must go to TSA for safety inspection and then typically back to the airline to try to determine the owner-either through external or internal identifying information or from the list of bags known to be missing. When this occurs, typically the bag can no longer make the departing or connecting flight (if at home or transfer airport) or baggage claim (if at destination airport).

At the destination baggage claim there is generally no system in place to ensure the bag has been picked up or, if it has been, that it has been picked up by the purported owner. It is also sometimes difficult for a customer to spot his bag, especially if it is a common design and color. Typically, the current system does not frequently intermingle bags that are destined for different baggage carousels and, therefore, often has no mechanism for tracking bags at the destination airport. Other than reading the bag tag, there is no way to validate the association of the bag with the person picking it up or to provide better identifying information to customers (for example, to discourage accidentally collecting a similar but wrong bag). Sending bags directly from the plane to the baggage claim carousel does decrease the probability that the bags will be lost at the destination airport but may not eliminate it and may not offer any indication or proof that:
- The bag made it to the destination airport
- The bag made it to the carousel
- The bag was picked up by the right passenger.

Moreover, the current system does not offer any options to discourage the erroneous removal of bags by airport users, whether the removal is by accident or deliberately.

If a bag misses its flight or baggage claim pickup, it costs on average $150 (more, internationally) to return it to its owner. Globally, this cost of baggage mishandling amounts to more than $4 billion per year, half of that domestically in the US. The present disclosure, and related ones, are aimed at preventing those losses through:
- Active tracking of bags with exception management.
- Bag identification that references the bag itself, not a proxy.
- Allowing a misplaced bag to be quickly identified without the need for its assigned bag tag.
- Producing a system of sufficiently low cost to make usage of the system throughout the bag routing system feasible.

Most if not all of the problems elaborated *supra* may be mitigated or entirely solved by identifying a transported object by referencing the object itself, specifically, its intrinsic structure, rather than relying on any tag, label, RFID, or other contrivance attached to an object for purposes of identification or tracking. Such identifiers may still be used, but they are unnecessary in the proposed system.

The new processes and equipment disclosed herein may be used either in conjunction with current processes or as replacement for it. Both such uses are in view in this disclosure. Although some transporters of physical objects may only implement portions of the concepts disclosed herein, all such uses are in view. The following section describes examples of a complete process and suitable equipment for implementing it. Details of well-known aspects (conveyor belts, wireless networking, scales, computer servers, etc.) are omitted in the interest of brevity.

In preferred embodiments, no identification proxies are needed. In essence, the unique structure or material properties of an object (in part or in whole) becomes its identifier: the object provides its own identification data. Since nothing needs be added to the object, there is nothing to become unreadable or lost. And the identifier cannot be transferred to a different object.

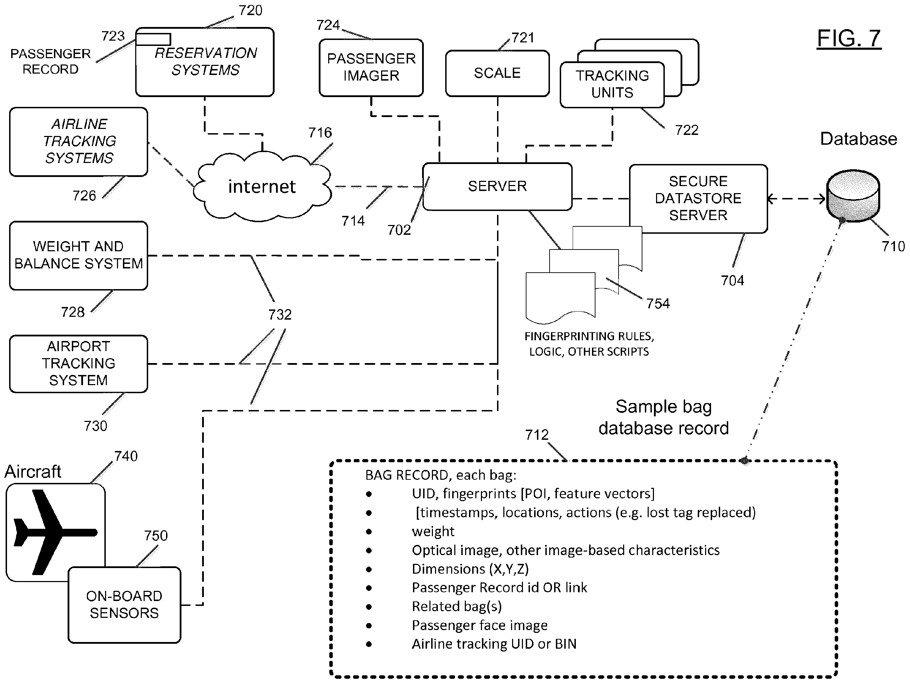

In a high-level overview of one embodiment, FIG. 7 is a simplified functional block diagram of selected systems and data communication links associated with an example of an air travel luggage tracking system. In FIG. 7, a central feature is a server 702 which may be coupled to various other elements by wired or wireless connections or a combination thereof. Such connections are illustrated generally by dashed lines. The server 702 is coupled to a secure datastore server 704 which in turn is coupled to or contains a database 710. The database may include various records, including a bag record, for each bag (or luggage item - it might be a stroller, car-seat, cardboard box or other shippable object). We use the term "bag" herein in a broad sense to include all such things, without limitation.

A sample bag database record 712, to be stored by the server 704 in database 710 may include, without limitation, elements or fields that comprise or encode one or more of the following:
- Unique ID, digital fingerprints (points of interest or areas of interest, feature vectors)
- Timestamps, locations, actions (e.g. lost tag replaced)
- Weight
- Optical image, other image-based characteristics
- Dimensions (height, width, depth)
- Passenger record ID or link
- Related bag(s)
- Passenger face image
- Airline tracking Unique ID or BIN

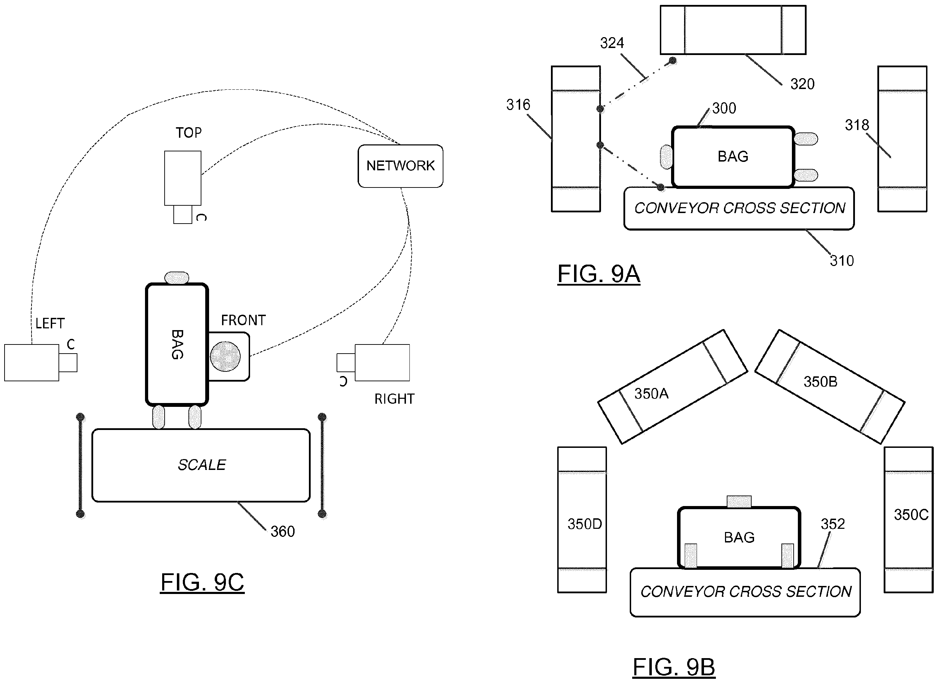

These and other data are further described later. Again in FIG. 7, an intake station, for example, at a ticket counter, may include a scale 721 for weighing an incoming bag, that is, one received from a customer-passenger. By way of the server 702, the weight of the bag may be input to the corresponding bag record in the database 710. A plurality of tracking units 722 refers to scanning equipment that may be positioned adjacent to a scale to capture image data of a bag (in part or in whole) while the bag is positioned on or near the scale. One example of a tracking unit may comprise a digital camera or other scanner. More details about image capture are described below with regard to FIGS. 9A, 9B and 9C. In general, the image data provided by one or more tracking units 722 is used by server 702 to form one or more digital fingerprints of the incoming bag, for storage in the database 710 in the corresponding record with other data and metadata. Preferably, a passenger imager 724 may be provided to capture a facial image of a passenger checking in a bag. The passenger imager 724 may be coupled to the server 702 so that the passenger image data may be stored and associated with the bag.

In an embodiment, the server 702 may be coupled over a communication link 714, such as a LAN or WAN, which may (or may not) involve the internet 716. Using the link 714, the server 702 may communicate with airline tracking systems 726. The server may communicate with an airline reservation system 720, where it may acquire a passenger record 723 associated with the bag being received and scanned. The server may copy parts or all of the passenger record, or a link to it, into the corresponding bag database record 712, so that it becomes associated with the inducted bag.

A weight and balance system 728 or airport tracking system 730 may be coupled to the server via link 732 to acquire weights and dimensions of the bags associated in the database 710 with a particular flight. Weight and balance information may be used for loading an aircraft, and for determining available (unused) cargo volume, as noted further below with regard to FIG. 9.

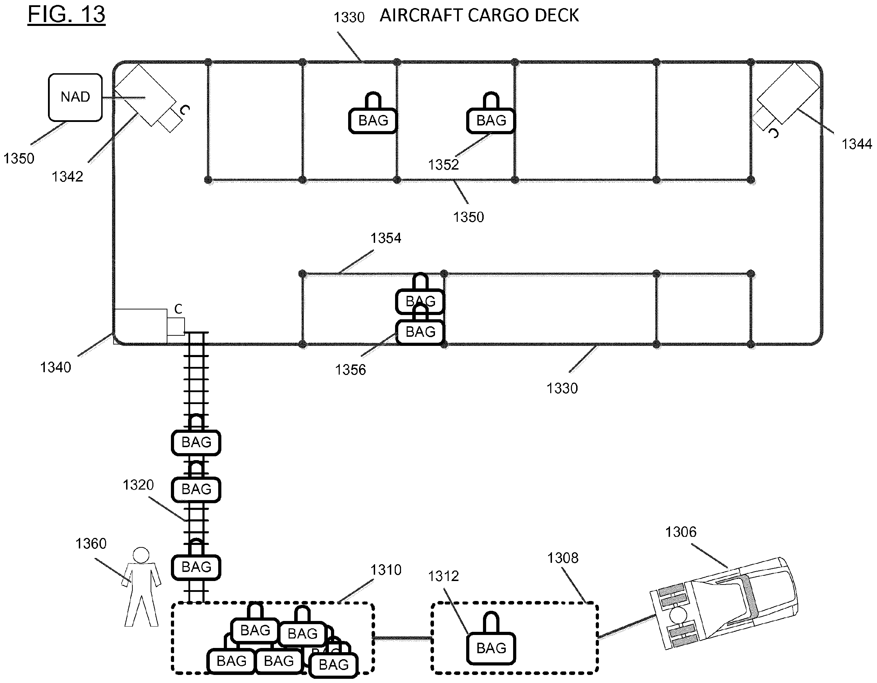

Finally, in FIG. 7, various on-board sensors 750 may be provided in an aircraft 740 to identify bags that are loaded into the aircraft. They may be identified automatically by scanning or imaging equipment similar to the tracking units 722. That is, in an embodiment, images of bags may be captured in or near the aircraft as they are loaded (or soon thereafter), as further described with regard to FIG. 13, *infra.* The image data may be converted to digital fingerprints, and the digital fingerprint may be used to find a matching record in the database 710. Assuming a match is found, the corresponding record may be updated with the action (e.g. loaded on plane), and a timestamp, and optionally other data such as a cargo hold location. If a match is not found in the database, the bag may have been inserted illicitly and steps may be taken to remove it from the plane. In some embodiments, rules and or scripts 754 may be executed by the server 702 to deal appropriately with various scenarios in a timely manner. Some logic and or scripts may be distributed to one or more tracking units which will be described further *infra.*

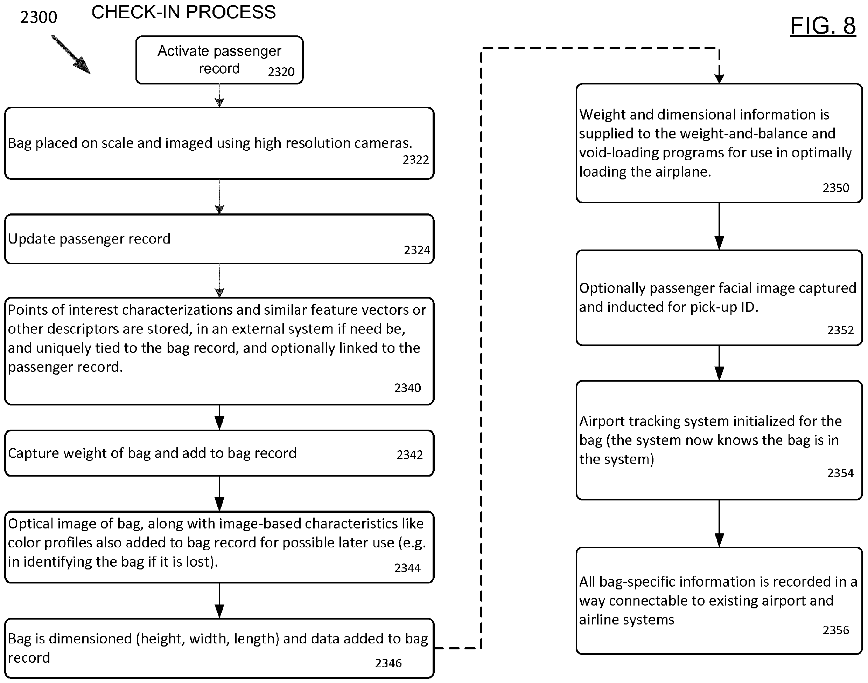

In one embodiment, FIG. 8 is an example of a simplified flow diagram of an example of a check-in process 2300. At block 2320, a passenger record is activated. A passenger record in this disclosure may refer to a passenger name record, a flight record, or any other internal or external passenger record, including any travel record containing information relating to a passenger such as airline or airport passenger records of any kind. Passenger records may include associations with other records such as bag-related records or other records. At block 2322 a bag is placed on a scale and imaged using high resolution cameras or scanners (further described below). The passenger record is updated, block 2324, in an embodiment, passenger records and bag records may be variously related or associated to one another. In some embodiments, bag records may be fields in a passenger record. In some embodiments, a bag record may be linked to a corresponding passenger record.

At block 2340, identifying characteristics of the bag are generated based on the images acquired by the scanners. In an embodiment, areas of interest on the bag may be identified. Features may be extracted from the image data corresponding to the areas of interest. The extracted features may be expressed and stored in the form of feature vectors or other relatively compressed representations. This data and metadata may be stored in the database 710 or an external system. This data and metadata is uniquely associated to the bag record, which in turn may be linked to the corresponding passenger record.

At block 2342 weight of the bag is captured, for example, by scale 721 illustrated in FIG. 7. An optical image of the bag, along with image-based characteristics-for example, color profiles-may also added for later use in identifying the bag should it be lost. These data are added to the record, block 2344. In an embodiment, the bag may be dimensioned, for example, height, width, length, block 2346. This may be done by scanners at the same time and place as imaging for identification. The dimensions may be useful for identifying a bag manually, and for optimizing use of cargo space on board a plane, vehicle or other conveyance. In an embodiment, weight and dimensional information may be supplied to the weight-and-balance and void-loading programs for use in optimally loading the airplane, block 2350.

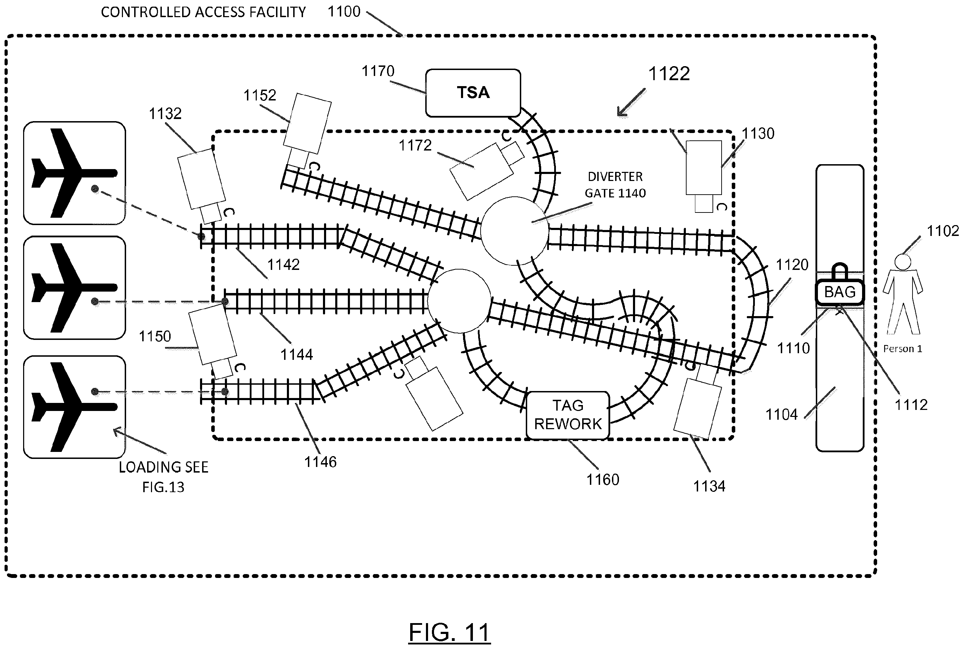

A facial image of the passenger may optionally be captured, block 2352, and inducted into or linked to the corresponding passenger record. The passenger's image may be captured by an imager 724 illustrated in FIG. 7. The facial image may be used for various aspects, including identifying the owner at a delivery location such as at the baggage claim at the destination airport. Further, at block 2354, an airport tracking system is initialized for the bag, i.e., the tracking system now "knows" the bag is in the system. This may occur when a bag 1112 is received at a counter 1104 as shown in FIG. 11. In general, referring to block 2356, all bag-specific information preferably should be recorded in a way connectable to existing airport and airline systems.

FIG. 9A illustrates an example of an arrangement of three scanners mounted adjacent to a conveyor 310 which is carrying a bag 300. Sizes are not to scale. This simplified figure shows one possible arrangement in which a first scanner 316 is mounted to one side of the conveyor; a second scanner 318 is mounted on the opposite side of the conveyor, and a third scanner 320 is mounted overhead, i.e. looking down at the top surface of the conveyor belt. A greater number of scanners, or fewer scanners, may be used. The term "scanner" is used herein in a very broad sense and may include, for example, a still camera, a video camera, an image capture array, a tracking unit, or any other device capable of performing a "scan" as defined in this disclosure. Preferably the scanner is arranged to create digital data responsive to the subject in its view. A field of view of scanner 316 is suggested by a pair of dashed lines 324.

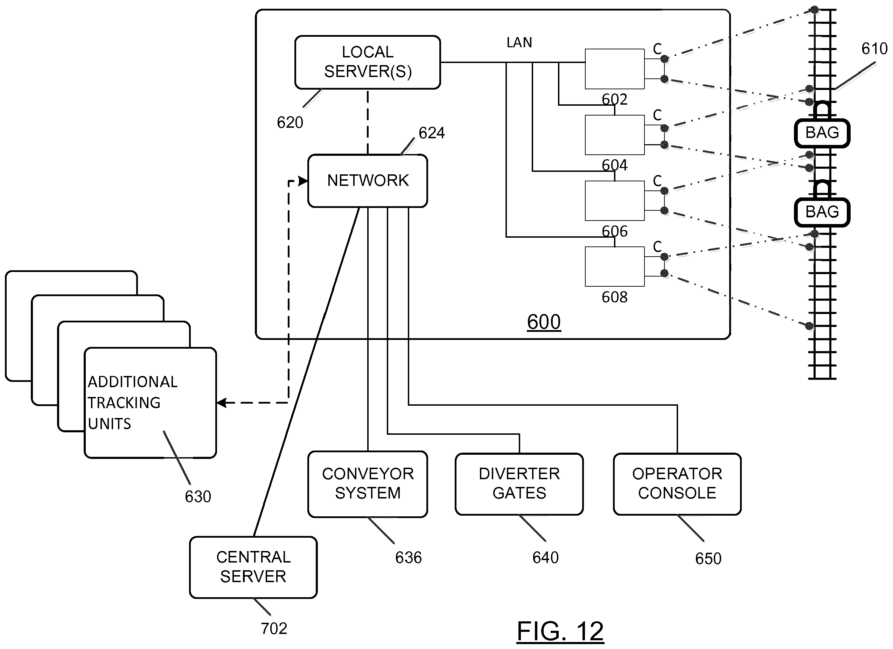

A scanner may be arranged to capture light at various parts of the spectrum, not limited to visible light. The scanners may be coupled to a network or server to transfer the acquired digital image data. Server software may process the acquired digital image data, separately, as well as merging data from multiple scanners so as to form a composite image of all or part of an item. The configuration shown (as well as various others) may be used to determine dimensions of the bag 300. Preferably, the scanners are sufficiently enabled to capture image data while the conveyor and bag are moving. FIG. 9B is a simplified example of another arrangement showing four scanners: 350A, 350B, 350C, and 350D, trained on a conveyor 352. FIG. 9C shows another alternative arrangement in which scanners, which may comprise cameras or tracking units, are positioned to each side, above, and in front of a bag to capture image data while the bag is sitting on a scale 360, for example, at a check-in counter. The scanners may be coupled to a network, as indicated, to communicate with a server. In some embodiments, the scanners may be part of a tracking unit, in which case the network may be a local network of the tracking unit such as network 624 in FIG. 12.

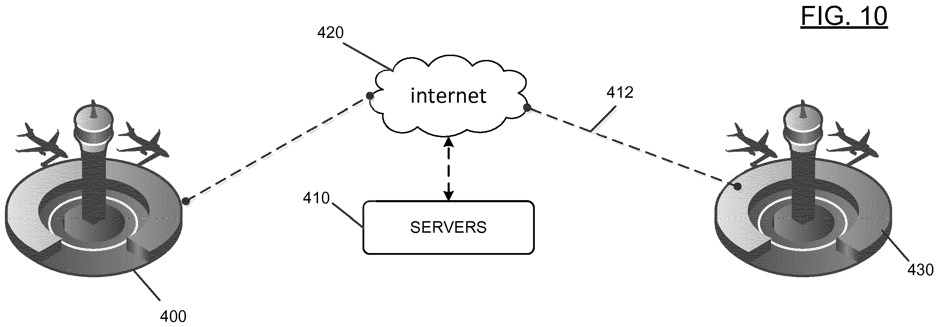

FIG. 10 is a simplified illustration of a system to extend functionality over multiple airports, for example, to track an item from origination at an originating airport 400 to a destination airport 430. To that end, central servers 410 may be coupled to various airports by data communications links 412 which may (or may not) utilize the internet 420. In some cases, each of the airports may be equipped as discussed below with regard to FIGS. 7, 9, and 11.

FIG. 11 is a simplified diagram illustrating one example of an intra-airport system for identifying and tracking luggage or parcel pieces consistent with the present disclosure. Specifically, FIG. 11 illustrates a controlled access facility 1100 which may be the baggage handling area or "bag room" at an airport. It is not open to the public outside of the dashed line 1100. An airline passenger 1102 ("Person 1") checks in at an airline ticket counter 1104. The passenger presents their bag 1112 by setting it on a scale 1110 in a typical arrangement. The scale in some cases may correspond to the scale 721 in FIG. 7. At the check-in station, a passenger record is accessed according to current procedures, and additional information may be associated with it. Some of that information, such as images and digital fingerprints of the passenger's face, relates to the passenger, while other information relates to the passenger's bag(s). At the check-in station, all data relevant to the bag is captured and associated with a passenger record. The bag is placed on a scale to capture its weight. It is imaged on at least one side and digital fingerprints are created from those images and associated with the passenger record and other relevant records for the purposes of tracking and identifying the bag.

Points of interest characterizations and similar feature vectors or other descriptors are stored, in an external system if need be, and uniquely tied to the bag record, which is operationally linked to the passenger record.

Weight of the bag 1110 is captured.

Optical image of bag, along with image-based characteristics like color profiles also added for possible later use (e.g. in identifying the bag if it is lost). Scanners may be used at the check-in station for imaging. Scanners may be arranged adjacent to the scale as discussed above.

Bag is dimensioned (height, width, and length), which again may be done using scanners.

Weight and dimensional information is supplied to the weight-and-balance and void-loading programs for use in optimally loading the airplane.

Passenger face image captured and inducted for pick-up ID.

Airport tracking system initialized for the bag (the system now knows the bag is in the system).

After check-in, focus shifts to tracking movement of the bag, as well as detecting any bags that enter the system (other than at check-in) or leave the system (other than at aircraft loading or baggage claim).

Transport of luggage may be roughly divided into: transporting the bag from check-in to the airplane, transporting between airplanes, and transporting from the airplane to the baggage claim. FIG. 11 shows a simplified diagram of a portion of a controlled access facility 1100, including portions of a bag room. As noted, incoming bags are introduced at 1120 on to a conveyor system 1122. Scanning equipment, such as tracking cameras 1130, 1132, 1134 etc. are located strategically about the conveyor system, as explained in more detail below. The conveyor system includes multiple diverter gates such as 1140 for directing each bag to its intended flight. A plurality of exit conveyors such as 1142, 1144 and 1146 may be provided as termini of the conveyor system for respective flights. A tracking camera such as 1150,1152 may be provisioned for each exit conveyor to identify and track each bag leaving the conveyor system. In some cases, a tag rework process 1160 may be used for unreadable tags to be repaired or replaced. For example, the diverter gate 1140 may divert a bag with an unreadable or missing tag to the rework 1160. As discussed above, a bag may be diverted or manually removed to a TSA process 1170 for inspection, and then rescanned at 1172 if and when it re-enters the system.

Each of these transport routes presents somewhat different challenges. In a preferred embodiment, there will be multiple tracking units or other scanning equipment along the way, some performing simple tracking, some performing a combination of tracking and identification, some performing real-time data capture and analysis in the immediate vicinity of the belt, some for dimensioning, and some triggering diverter gates. Other functions may be implemented, generally by software changes.

The exact number of tracking units and their individual capabilities will depend on the particular deployment. The proposed unit is less costly per camera than existing barcode scanning arrays or RFID readers. Functionally, tracking units may enable or enhance the following operations:

### From check-in to airplane:

The bag is placed on the entrance to the conveyor system, 1120. As it moves, it is acquired by one tracking camera (or other scanning equipment) after another. Referring to FIG. 12, a simple example tracking unit 600 is illustrated in the context of a bag room. In normal operation, each camera (or other scanner) follows the bag from just before it leaves the field of view of the previous camera. To illustrate, in FIG. 12, the tracking unit 600 has cameras or scanners 602, 604, 606 and 608 arranged sequentially to observe (acquire image data from) bags traveling on the conveyor 610. Each camera has a field of view that overlaps that of the next adjacent camera, and thus avoid creating any blind spots.

In an embodiment, each tracking unit 600 has the ability to identify the bags it "sees" to ensure that the object seen is the object that is supposed to be there. To do so, in one example, the cameras may be linked, for example, by a LAN (wired or wireless) to a local server 620. The local server, in turn, may be coupled via a network 624 to a server (702 in FIG. 7) to query the server for matching acquired image data. The network 624 may extend to additional tracking units 630 to form a system of related tracking units.

The tracking unit 600 may be operatively coupled to the conveyor system, as well as to diverter gates and an operator console, via appropriate interfaces 636, 640 and 650, respectively. In an embodiment, a system of tracking units may cover an area from check-in to exit of the baggage handling area. On the receiving side, one system of tracking units may be arranged to cover an area or gate where bags are unloaded from an aircraft, tracking from the plane or cargo unit, in some cases all the way to delivery baggage claim.

In some embodiments, tracking units may be able to do real-time image (and other) analysis to ascertain whether a bag has been interfered with. Preferably, the system of tracking units can reestablish tracking after, say, a bag tumbles going down a steep section of the conveyor. Some units may be able to detect that such an event has occurred. These and other features preferably are implemented in software executable in local servers 620. Some examples of logic and scripts that may be executed in the servers are mentioned below.

In preferred embodiments, each tracking unit (or some units) can reestablish tracking in the event of failure of an up-stream unit. Known methods can be used to monitor that each unit, or each camera within a unit, is functioning. Whenever coverage is imperfect (because of location of the cameras, bends and level changes in the conveyors, because a camera or its lighting fails, or for other reasons), the combined identification/tracking becomes a protection against one bag being surreptitiously substituted for another.

When there is a jam or other shutdown of the conveyors, the system of tracking units is the means for reestablishing the identity of each bag caught in the stoppage and restarting tracking. In more detail, each camera in a tracking unit may have a separate but related function, that of data capture and analysis on the activities within its field of view. There are several parts of this, including "bad actor" detection (e.g. detecting someone reaching over the edge of the conveyor).

Thus, in an embodiment, the tracking unit may provide several functions, including at least one of the following:
- Tracking
- Identification/Tracking
- Shutdown recovery
- Reestablishment of identity after explosives inspection.
- Manual intervention recovery (e.g. after TSA inspection)
- Real-time data capture and analysis.
In some embodiments, tracking units located near diverter gates may both time and identify the bags that need to be diverted so that the gate can activate. The relatively more complex tracking units may have cameras looking both up and downstream for back tracking and identification/tracking. Tracking units may also have more complete identification components such as cameras (several line cameras per unit would work well for this) looking in from the sides of the conveyor walls (protected from collisions with bags), looking down from the top and up between belts at the belt junctions, and/or looking along the belt. Such a system may be able to see many sides of most bags and perform essentially complete authentication.

In a preferred embodiment, some tracking units may have dimensioning capabilities to aid in tracking (e.g. by filtering out candidate bags that do not match the recorded size). This dimensioning capability is separate from, but interconnected with the dimensioning done at check-in. Check-in dimensioning feeds the airplane loading algorithm and provides a reference to dimensioning-capable tracking units. When the bag reaches the airplane (or the loading container) it is identified. The loader (either human or machine) is instructed where to put the item for weight and balance optimization. The flight record in the database is updated to reflect that the bag has been loaded on its flight and the bag record is removed from the current stakeholder's record of live bag traffic. When the plane carrying the bag arrives at the destination airport, the bag is offloaded from the airplane. It is identified as having arrived and other information concerning its arrival entered into the tracking database. When the bag reaches the baggage claim carousel it is identified again and the bag record updated to indicate its arrival. The bag may, if desired, be routed to a bin that shows the name of the passenger to whom it is assigned (akin to the manner used in rental car pickups).

If desired, in some embodiments the person claiming the bag can be identified as the person who checked the bag in through facial recognition or other means. The act of picking up the bag is identified and recorded and the bag removed from the database of bags being tracked by the system.

FIG. 13 is a simplified diagram illustrating methods and apparatus for continuing object (bag) identification and tracking from the bag room to loading an originating aircraft. A vehicle 1306 may be used to tow one or more bag carts 1308, 1310 from the bag room (not shown), loaded with bags 1312 as is commonplace. A baggage handler 1360 places each bag on a conveyor 1320 to carry it up into the plane cargo deck 1330. A scanner, such as camera 1340 may be positioned to scan each bag as it ascends the conveyor or enters the aircraft. The scanner preferably is communicatively coupled to the tracking system, for example, by wireless networking via NAD 1350. In this way, each bag loaded into the aircraft can be identified and verified as belonging on that flight before takeoff, in a largely automated process.

In some embodiments, additional scanners, such as cameras or scanners 1342, 1344 may be located inside the cargo deck to "observe" into which bin each bag is positioned. For example, bag 1352 is loaded into cargo bin 1350, and bag 1356 is loaded into bin 1354. This information can be used both to determine the cargo space used (and conversely not yet used), as well as weight and balance determinations if desired. At a destination airport, one or more scanners may be used to record each bag removed from the aircraft. Some or all of this data may be added or otherwise associated with to the corresponding passenger record for each bag.

### Hardware and Software

Most of the equipment discussed above comprises hardware and associated software. For example, the typical portable device is likely to include one or more processors and software executable on those processors to carry out the operations described. We use the term software herein in its commonly understood sense to refer to programs or routines (subroutines, objects, plug-ins, etc.), as well as data, usable by a machine or processor. As is well known, computer programs generally comprise instructions that are stored in machine-readable or computer-readable storage media. Some embodiments of the present invention may include executable programs or instructions that are stored in machine-readable or computer-readable storage media, such as a digital memory. We do not imply that a "computer" in the conventional sense is required in any particular embodiment. For example, various processors, embedded or otherwise, may be used in equipment such as the components described herein.

Memory for storing software again is well known. In some embodiments, memory associated with a given processor may be stored in the same physical device as the processor ("on-board" memory); for example, RAM or FLASH memory disposed within an integrated circuit microprocessor or the like. In other examples, the memory comprises an independent device, such as an external disk drive, storage array, or portable FLASH key fob. In such cases, the memory becomes "associated" with the digital processor when the two are operatively coupled together, or in communication with each other, for example by an I/O port, network connection, etc. such that the processor can read a file stored on the memory. Associated memory may be "read only" by design (ROM) or by virtue of permission settings, or not. Other examples include but are not limited to WORM, EPROM, EEPROM, FLASH, etc. Those technologies often are implemented in solid state semiconductor devices. Other memories may comprise moving parts, such as a conventional rotating disk drive. All such memories are "machine readable" or "computer-readable" and may be used to store executable instructions for implementing the functions described herein.

A "software product" refers to a memory device in which a series of executable instructions are stored in a machine-readable form so that a suitable machine or processor, with appropriate access to the software product, can execute the instructions to carry out a process implemented by the instructions. Software products are sometimes used to distribute software. Any type of machine-readable memory, including without limitation those summarized above, may be used to make a software product. That said, it is also known that software can be distributed via electronic transmission ("download"), in which case there typically will be a corresponding software product at the transmitting end of the transmission, or the receiving end, or both.

Having described and illustrated the principles of the invention with reference to illustrated embodiments, it will be recognized that the illustrated embodiments can be modified in arrangement and detail without departing from such principles, and can be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms can reference the same or different embodiments that are combinable into other embodiments.

Embodiments of the invention may include a non-transitory machine-readable medium comprising instructions executable by one or more processors, the instructions comprising instructions to perform the elements of the embodiments as described herein.

Consequently, in view of the wide variety of permutations to the embodiments described herein, this detailed description and accompanying material is intended to be illustrative only, and should not be taken as limiting the scope of the invention. Examples of some enumerated example embodiments ("EEE") follow below.

EEE1. A computer-implemented method comprising the steps of:
receiving a physical object at a controlled-access facility;
scanning the object at a first location to capture identifying information of the object based on intrinsic properties of the object, without specific need of any label, tag, or other extrinsic proxy that may be attached to the item;
processing the identifying information of the object to form at least one feature vector;
inducting the object into a reference database system by storing a record in the reference database system that includes the feature vector;
transporting the object toward a second location within the controlled-access facility;
providing a tracking system for tracking objects in the controlled-access facility; and
tracking the object using the tracking system to substantially continuously maintain both position and identity information of the object, the identity information associated with the stored record.

EEE2. The method of EEE1 wherein the tracking step includes providing a plurality of tracking units inside the controlled-access facility, each tracking unit comprising -
at least one tracking unit camera that is configured to capture identifying information of an object within its field of view, based on intrinsic properties of the object, without regard to any label, tag, or other extrinsic proxy that may be attached to the item;
a tracking unit processor coupled to the tracking unit camera to acquire the captured identifying information;
a memory in or coupled to the tracking unit processor to store data and machine-readable instructions executable by the tracking unit processor; and
a network interface coupled to the tracking unit processor to enable communications over a network.

EEE3. The method of EEE1 including:
detecting an introduction of a foreign object into the tracking system;
scanning the foreign object to capture identifying information, based exclusively on intrinsic properties of the foreign object;
querying the reference database based on the captured identifying information to obtain a result; and
taking a selected action based on the query result.

EEE4. The method of EEE1 wherein:
the controlled-access facility comprises a bag room at an airport;
the bag room includes an intake bag belt arranged to receive a passenger's bag and move it inside the bag room;
the first location is in a vicinity of the intake bag belt; and
the tracking system is configured for tracking a received bag from the first location at least until the bag departs the bag room.

EEE5. The method of EEE1 wherein:
tracking the object includes scanning each bag as it is loaded into an aircraft for a flight, to capture identifying information for each bag, based exclusively on intrinsic properties of the bag, without specific need of any label, tag, or other extrinsic proxy that may be attached to the bag; and
verifying that each scanned bag was previously inducted into the reference database system and is ticketed for carriage on the said flight.

EEE6. The method of EEE5 including taking a predetermined action based on a failure to verify that a scanned bag was previously inducted into the reference database system and is ticketed for carriage on the said flight.

EEE7. The method of EEE1 and further comprising, for tracking objects at a terminus location (such as carousel), the steps of:
scanning an object that enters the terminus location to obtain image data;
identifying the object based on the image data; and
updating a reference database record associated with the identified object to reflect the said scanning, the updating including a terminus identifier or location and timestamp.

EEE8. The method of EEE1 and further comprising, to locate a lost or delayed object, the steps of:
acquiring metadata associated with the errant object;
querying a reference database based on the metadata to obtain a result; and
determine a location of the errant object based on the result.

EEE9. The method of EEE1 applied to identify an unknown object comprising:
acquiring a digital fingerprint of the unknown object;
comparing the digital fingerprint with digital fingerprints in a database of known objects to obtain a result; and
determining an identity of the unknown object based on the result.

EEE10. A method for continuous tracking of an object comprising the steps of:
inducting the object into a reference database;
tracking the object as it moves on a conveyance system through a facility;
detecting the object diversion from the conveyance system to an auxiliary process that may involve manual handling;
updating a corresponding record associated with the object in the reference database based on the diversion;
detecting an entering object that enters the conveyance system from the auxiliary process;
comparing the entering object with a database of known diverted objects to obtain a result;
updating a corresponding record associated with the entering object a database with metadata based on the result.

EEE11. The method of EEE10 wherein the auxiliary process comprises an inspection of the object by border or security officials or an automated process.

EEE12. The method of EEE10 including:
communicating the additional metadata of the identified object to a tracking unit associated with the re-entry point of the conveyance system; and
returning the object to the conveyance system to resume processing flow.

EEE13. A method for tracking an object in a secure facility, comprising:
receiving an error message (tag missing or unreadable) from a tag reader;
based at least in part on a location of the tag reader, querying the reference database server to find a matching record of a last bag that entered the tag reader location;
based on a result of the query, updating the matching record in the database to indicate the tag lost message; and
sending a message to the virtual binning system to re-associate the identified bag with a corresponding virtual bin.

EEE14. The method of EEE13 including:
detecting a bag having a missing or unreadable tag;
scanning the detected bag to capture identifying information of the bag based on intrinsic properties of the bag;
processing the identifying information to form a digital fingerprint of the bag;
identifying the bag based on the digital fingerprint; and
processing the bag based on its identity.

EEE15. The method of EEE 14 including:
automatically printing a replacement tag for the identified bag.

EEE16. The method of EEE 13 including:
in the virtual binning system, based on the message, marking the virtual bin as carrying a bag without a readable tag, and updating the virtual bin to associate it to the matching record.

EEE17. A method for tracking objects in a controlled-access facility having a conveyance system for moving objects, the method comprising:
detecting an irregular event or exception condition that affects at least one of the moving objects;
based on the exception condition, automatically identifying the affected object in the conveyance system; and
executing a predetermined action based on a result of identifying the affected object.

EEE18. The method of EEE17 wherein identifying the object includes:
scanning the object to capture identifying information for the object, based exclusively on intrinsic properties of the object; and
querying a reference database based on the captured identifying information to obtain the result.

EEE 19. The method of EEE 17 wherein the irregular event or exception condition includes a jam of the conveyor system; and the identifying and executing steps are directed to all objects involved in the jam.

EEE20. A system for tracking objects comprising:
an intake system for receiving a physical object from a customer for transport;
a tracking system for tracking the object substantially continuously from the intake system to a delivery location at a destination, the tracking system configured to substantially continuously track an identity and a location of the object;
a secure database system coupled to the intake system and to the tracking system, the database system arranged to maintain a corresponding database record for each baggage item received by the intake system, wherein each record includes, for the corresponding baggage item, at least one Unique ID and at least one feature vector comprising a set of numeric values based on an image of at least a part of the object; and
a delivery system including a delivery platform, and a scanner for capturing an image of an object entering the delivery platform, wherein the scanner is coupled to the secure database system to update a corresponding record responsive to the object entering the delivery platform.

EEE21. The system of EEE20 wherein the delivery platform comprises a powered conveyor system, carousel, or the like arranged for moving objects that enter the delivery platform.

EEE22. The system of EEE20 wherein a tracking unit or other input device registers the presence of a bag in a particular location or placement into a particular operational status, regardless of location or specific relation to a physical platform.

EEE23. The system of EEE21 wherein a tracking unit or other input device registers the presence of a bag in a particular location or placement into a particular operational status, regardless of location or specific relation to a physical platform.

EEE24. A method comprising:
at a monitoring position of a delivery platform, capturing image data of each object passing by the monitoring position;
processing the captured image data for each object to form at least one feature vector; for each object, querying a reference database system to find a matching database record based on the corresponding feature vector; and
based on finding a matching record, updating the matching record to reflect the image capture.

EEE25. The method of EEE24 including:
maintaining a list of objects passing by the monitoring position;
detecting that an object that has passed the monitoring position more than a predetermined number of cycles of the carousel; and
sending a message over the network that identifies the detected object as an unclaimed object.

EEE26. The method of EEE24 wherein other operationally-relevant data, including but not limited to, flow rates, exceptional conditions, baggage spacing or positions, or other data relevant to applications of queueing theoretic optimizations are included in the message.

EEE27. A tracking unit system comprising -
at least one tracking unit camera that is configured to capture identifying information of an object within its field of view, based on intrinsic properties of the object, without specific need of a label, tag, or other extrinsic proxy that may be attached to the item;
a tracking unit processor coupled to the tracking unit camera to acquire the captured identifying information;
a memory in or coupled to the tracking unit processor to store data and machine-readable instructions executable by the tracking unit processor; and
a network interface coupled to the tracking unit processor to enable communications over a network.

EEE28. The tracking unit according to EEE27 wherein the stored instructions enable the tracking unit to configure itself to the specifics of a given situation or installation including, but not limited to, absolute positioning and positioning relative to any other units, view geometry, lighting, and overall baseline appearance, both static and dynamic, of the tracking environment.

EEE29. The tracking unit according to EEE27 and further - wherein the instructions executable by the processing include instructions for exchanging data over the network interface with another tracking unit to coordinate tracking objects that may move between a field of view of a first tracking unit and a field of view of a second tracking unit.

EEE30. The tracking unit according to EEE27 and further - wherein the instructions executable by the processing include instructions for exchanging data over the network interface with a reference database server to coordinate tracking objects, wherein each object is reflected in an associated record of a reference database maintained by the reference database server.

EEE31. A system comprising a plurality of tracking units, each tracking unit according to EEE27, wherein the system includes executable instructions for Shutdown Recovery so that when there is a jam or other shutdown of the conveyors, the system of tracking units is the means for reestablishing the identity of each bag caught in the stoppage and restarting tracking.

## Claims

1. A computer-implemented method comprising the steps of:
receiving a physical object at a controlled-access facility;
scanning the object at a first location to capture identifying information of the object based on intrinsic properties of the object, without specific need of any label, tag, or other extrinsic proxy that may be attached to the item;
processing the identifying information of the object to form at least one feature vector;
inducting the object into a reference database system by storing a record in the reference database system that includes the feature vector;
transporting the object toward a second location within the controlled-access facility;
providing a tracking system for tracking objects in the controlled-access facility; and
tracking the object using the tracking system to substantially continuously maintain both position and identity information of the object, the identity information associated with the stored record.

2. The method of claim 1 wherein the tracking step includes providing a plurality of tracking units inside the controlled-access facility, each tracking unit comprising -
at least one tracking unit camera that is configured to capture identifying information of an object within its field of view, based on intrinsic properties of the object, without regard to any label, tag, or other extrinsic proxy that may be attached to the item;
a tracking unit processor coupled to the tracking unit camera to acquire the captured identifying information;
a memory in or coupled to the tracking unit processor to store data and machine-readable instructions executable by the tracking unit processor; and
a network interface coupled to the tracking unit processor to enable communications over a network;
and/or the method including:
detecting an introduction of a foreign object into the tracking system;
scanning the foreign object to capture identifying information, based exclusively on intrinsic properties of the foreign object;
querying the reference database based on the captured identifying information to obtain a result; and
taking a selected action based on the query result;
and/or wherein:
the controlled-access facility comprises a bag room at an airport;
the bag room includes an intake bag belt arranged to receive a passenger's bag and move it inside the bag room;
the first location is in a vicinity of the intake bag belt; and
the tracking system is configured for tracking a received bag from the first location at least until the bag departs the bag room;
and/or wherein:
tracking the object includes scanning each bag as it is loaded into an aircraft for a flight, to capture identifying information for each bag, based exclusively on intrinsic properties of the bag, without specific need of any label, tag, or other extrinsic proxy that may be attached to the bag; and
verifying that each scanned bag was previously inducted into the reference database system and is ticketed for carriage on the said flight;
and/or wherein:
tracking the object includes scanning each bag as it is loaded into an aircraft for a flight, to capture identifying information for each bag, based exclusively on intrinsic properties of the bag, without specific need of any label, tag, or other extrinsic proxy that may be attached to the bag;
verifying that each scanned bag was previously inducted into the reference database system and is ticketed for carriage on the said flight; and
taking a predetermined action based on a failure to verify that a scanned bag was previously inducted into the reference database system and is ticketed for carriage on the said flight;
and/or the method further comprising, for tracking objects at a terminus location (such as carousel), the steps of:
scanning an object that enters the terminus location to obtain image data;
identifying the object based on the image data; and
updating a reference database record associated with the identified object to reflect the said scanning, the updating including a terminus identifier or location and timestamp;
and/or the method further comprising, to locate a lost or delayed object, the steps of:
acquiring metadata associated with the errant object;
querying a reference database based on the metadata to obtain a result; and
determine a location of the errant object based on the result;
and/or the method applied to identify an unknown object comprising:
acquiring a digital fingerprint of the unknown object;
comparing the digital fingerprint with digital fingerprints in a database of known objects to obtain a result; and
determining an identity of the unknown object based on the result.

3. The method of claim 1 or claim 2 for continuous tracking of an object, wherein tracking the object using the tracking system comprises tracking the object as it moves on a conveyance system through a facility, the method further comprising the steps of:
detecting the object diversion from the conveyance system to an auxiliary process that may involve manual handling;
updating a corresponding record associated with the object in the reference database based on the diversion;
detecting an entering object that enters the conveyance system from the auxiliary process;
comparing the entering object with a database of known diverted objects to obtain a result;
updating a corresponding record associated with the entering object a database with metadata based on the result.

4. The method of claim 3 wherein the auxiliary process comprises an inspection of the object by border or security officials or an automated process;
and/or the method including:
communicating the additional metadata of the identified object to a tracking unit associated with the re-entry point of the conveyance system; and
returning the object to the conveyance system to resume processing flow.

5. The method of any of claims 1-4 for tracking an object in a secure facility, the method further comprising:
receiving an error message (tag missing or unreadable) from a tag reader;
based at least in part on a location of the tag reader, querying the reference database server to find a matching record of a last bag that entered the tag reader location;
based on a result of the query, updating the matching record in the database to indicate the tag lost message; and
sending a message to the virtual binning system to re-associate the identified bag with a corresponding virtual bin.

6. The method of claim 5 including:
detecting a bag having a missing or unreadable tag;
scanning the detected bag to capture identifying information of the bag based on intrinsic properties of the bag;
processing the identifying information to form a digital fingerprint of the bag;
identifying the bag based on the digital fingerprint; and
processing the bag based on its identity;
or the method including:
detecting a bag having a missing or unreadable tag;
scanning the detected bag to capture identifying information of the bag based on intrinsic properties of the bag;
processing the identifying information to form a digital fingerprint of the bag;
identifying the bag based on the digital fingerprint; and
processing the bag based on its identity;
automatically printing a replacement tag for the identified bag;
and/or the method including:
in the virtual binning system, based on the message, marking the virtual bin as carrying a bag without a readable tag, and updating the virtual bin to associate it to the matching record.

7. The method of any of claims 1-6 for tracking objects in a controlled-access facility having a conveyance system for moving objects, the method comprising:
detecting an irregular event or exception condition that affects at least one of the moving objects;
based on the exception condition, automatically identifying the affected object in the conveyance system; and
executing a predetermined action based on a result of identifying the affected object.

8. The method of claim 7 wherein identifying the object includes:
scanning the object to capture identifying information for the object, based exclusively on intrinsic properties of the object; and
querying a reference database based on the captured identifying information to obtain the result;
and/or:
wherein the irregular event or exception condition includes a jam of the conveyor system; and the identifying and executing steps are directed to all objects involved in the jam.

9. The method of any of claims 1-8, the method further comprising:
at a monitoring position of a delivery platform, capturing image data of each object passing by the monitoring position;
processing the captured image data for each object to form at least one feature vector; for each object, querying a reference database system to find a matching database record based on the corresponding feature vector; and
based on finding a matching record, updating the matching record to reflect the image capture.

10. The method of claim 9 including:
maintaining a list of objects passing by the monitoring position;
detecting that an object that has passed the monitoring position more than a predetermined number of cycles of the carousel; and
sending a message over the network that identifies the detected object as an unclaimed object;
and/or:
wherein other operationally-relevant data, including but not limited to, flow rates, exceptional conditions, baggage spacing or positions, or other data relevant to applications of queueing theoretic optimizations are included in the message.

11. A tracking unit comprising -
at least one tracking unit camera that is configured to capture identifying information of an object within its field of view, based on intrinsic properties of the object, without specific need of a label, tag, or other extrinsic proxy that may be attached to the item;
a tracking unit processor coupled to the tracking unit camera to acquire the captured identifying information;
a memory in or coupled to the tracking unit processor to store data and machine-readable instructions executable by the tracking unit processor; and
a network interface coupled to the tracking unit processor to enable communications over a network.

12. The tracking unit according to claim 11 wherein the stored instructions enable the tracking unit to configure itself to the specifics of a given situation or installation including, but not limited to, absolute positioning and positioning relative to any other units, view geometry, lighting, and overall baseline appearance, both static and dynamic, of the tracking environment;
and/or:
wherein the instructions executable by the processing include instructions for exchanging data over the network interface with another tracking unit to coordinate tracking objects that may move between a field of view of a first tracking unit and a field of view of a second tracking unit;
and/or:
wherein the instructions executable by the processing include instructions for exchanging data over the network interface with a reference database server to coordinate tracking objects, wherein each object is reflected in an associated record of a reference database maintained by the reference database server.

13. A system for tracking objects comprising:
an intake system for receiving a physical object from a customer for transport;
a tracking system for tracking the object substantially continuously from the intake system to a delivery location at a destination, the tracking system configured to substantially continuously track an identity and a location of the object;
a secure database system coupled to the intake system and to the tracking system, the database system arranged to maintain a corresponding database record for each baggage item received by the intake system, wherein each record includes, for the corresponding baggage item, at least one Unique ID and at least one feature vector comprising a set of numeric values based on an image of at least a part of the object; and
a delivery system including a delivery platform, and a scanner for capturing an image of an object entering the delivery platform, wherein the scanner is coupled to the secure database system to update a corresponding record responsive to the object entering the delivery platform.

14. The system of claim 13 wherein the delivery platform comprises a powered conveyor system, carousel, or the like arranged for moving objects that enter the delivery platform.

15. The system of claim 13 or claim 14, further comprising a plurality of tracking units, each tracking unit according to claim 11 or claim 12, wherein the system includes executable instructions for Shutdown Recovery so that when there is a jam or other shutdown of the conveyors, the system of tracking units is the means for reestablishing the identity of each bag caught in the stoppage and restarting tracking;
and/or
wherein a tracking unit or other input device registers the presence of a bag in a particular location or placement into a particular operational status, regardless of location or specific relation to a physical platform.
